# EUROPÄISCHE PATENTSCHRIFT

(11) **EP 0 751 016 B1**
(45) Veröffentlichungstag und Bekanntmachung des Hinweises auf die Patenterteilung: **08.03.2000**
(21) Anmeldenummer: 96105322.0
(22) Anmeldetag: 03.04.1996
(51) Int. Cl.: B60C 23/00, F16J 15/34

(54) **Vorrichtung zur Abdichtung eines Gaskanals**
Sealing device for a gas conduit
Dispositif d'étanchéification d'un conduit de gaz

(30) Priorität: 28.06.1995 DE 19523435
(43) Veröffentlichungstag der Anmeldung: 02.01.1997
(73) Patentinhaber: Federal-Mogul Burscheid GmbH, 51399 Burscheid (DE)
(72) Erfinder: Zutz, Hans-Henning, Ing., 42929 Wermelskirchen (DE)

(56) Entgegenhaltungen:
- EP-A- 0 014 568
- EP-A- 0 375 846
- DE-A- 3 206 488
- DE-A- 4 017 788
- FR-A- 2 644 111
- GB-A- 1 308 833

## Beschreibung

Die Erfindung betrifft eine Vorrichtung zur Abdichtung eines Gaskanals zwischen zwei relativ zueinander rotierenden Maschinenteilen bei einer Reifendruckeinstellvorrichtung von Kraftfahrzeugen mit paarweise angeordneten, nach entgegengesetzten Seiten wirkenden, Dichtungen, wobei die Dichtungen aus Gleitringen bestehen, die mit einem Ringkörper zusammenwirken, welcher mit einem Maschinenteil in dichter Verbindung steht und mindestens eine Öffnung zur Durchführung des Gases aufweist.

Es ist bekannt, bei Kraftfahrzeugen für den Einsatz in stark wechselnden Bodenbeschaffenheiten die Reifen mit unterschiedlichen Luftdrücken zu versehen. Harter Untergrund erfordert eine Reifenfüllung mit hohem Druck, weicher, sumpfiger Untergrund erfordert eine Reifenfüllung mit geringem Druck. Die Anpassung des Reifendrucks an die jeweiligen Bodenverhältnisse erfolgt während des Fahrbetriebes und kann von der Fahrzeugkabine aus durchgeführt werden. Die technische Realisation dieser Systeme beruht auf einem Dichtungssystem, bestehend aus paarweise nach entgegengesetzten Seiten wirkenden Dichtungen in Form von Radialwellendichtungen. Zwischen diesen Dichtungen wird Luft durch einen Kanal mit relativ hohem Druck in die Reifen geleitet. Dieses Dichtungskonzept hat sich in der Praxis als nicht ausreichend erwiesen in bezug auf Dichtvermögen und Lebensdauer. Der Grund hierfür liegt unter anderem darin, daß die Radialwellendichtringe einem hohen Druck ausgesetzt sind, dem sie nur bedingt widerstehen können.
Aus der DE 4017788 A1 ist eine gattungsgemäße Vorrichtung bekannt. Der Ringkörper, über den das Gas in die Kraftfahrzeugreifen geleitet wird, fungiert als Gegelauffläche für die Gleitringe. Bei Druckbeaufschlagung werden die Gleitringe teilweise von dem Ringkörper weggedrückt. Die Vorrichtung ist deshalb für hohe Drücke nicht geeignet. Der Erfindung liegt die Aufgabe zugrunde ein Dichtungssystem zu schaffen, welches im Hinblick auf die Lebensdauer und auf das Abdichtungsvermögen eine Verbesserung zu gattungsgemäßen Abdichtvorrichtungen darstellt.

Diese Aufgabe wird erfindungsgemäß durch die kennzeichnenden Merkmale des Patentanspruch 1 gelöst. Auf diese Weise ist es nunmehr möglich, den Gaskanal zur Befüllung der Reifen von Kraftfahrzeugen mit an sich bekannten Gleitringdichtungen abzudichten. Da an Gleitringdichtungen hinsichtlich Druck, Gleitgeschwindigkeit und Temperatur hohe Anforderungen gestellt werden können, wird das System im Hinblick auf größtmögliche Dichtheit, höchste Lebensdauer, das heißt niedrigster Verschleiß, bei minimalem Einbauraum verbessert.

Der Ringkörp ist als Zwischengleit- oder -gegenring ausgebildet. Durch die Einbeziehung des Ringkörpers als Gleitringdichtungsbauteil reduziert sich die Anzahl der Bauteile auf ein Minimum. Aufgrund des geringen Einbauraumes kommen vorzugsweise Gleitringe mit einer zur Aufnahme eines elastischen Rollkörpers bestimmten, kegeligen Umfangsfläche zur Anwendung.

Einem weiteren Gedanken der Erfindung gemäß weist der Ringkörper mindestens eine axial gerichtete Bohrung auf, die als Schmierölkanal fungiert. Hierdurch ist es möglich, die in der Radnabe angeordneten Lager mit Öl zu versorgen, ohne daß eine zusätzliche Ölbohrung in einem Maschinenteil eingearbeitet werden muß. Im Gegensatz zum bisherigen System mit Radialwellendichtringen kann der Gasdruck im Gaskanal somit keine negative Auswirkung auf die Dichtwirkung der Gleitringe haben.

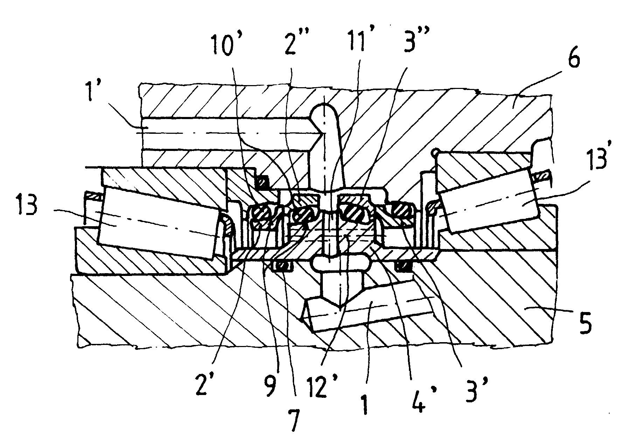

Die Erfindung ist in der Zeichnung dargestellt und wird im folgenden näher erläutert. Es zeigen:
Die einzige Figur zeigt einen Ausschnitt einer erfindungsgemäßen Vorrichtung im Querschnitt

Die in der Figur dargestellte Vorrichtung zur Abdichtung eines Gaskanals (1,1') besteht im wesentlichen aus Gleitringen (2',3'), die mit einem Ringkörper (4') zusammenwirken. Dargestellt ist eine Querschnittsansicht im Bereich eines Achsschenkels (5) eines Kraftfahrzeuges. Zur Befüllung der Reifen mit Luft wird über eine nicht weiter dargestellte Füllanlage die Luft über einen Gaskanal (1,1') in die Reifen (nicht dargestellt) geführt. Da der Gaskanal (1,1') über zwei relativ zueinander rotierende Maschinenteile führt, nämlich den stationären Achsschenkel (5), und die rotierende Radnabe (6), ist zwischen diesen Bauteilen eine Abdichtung des Gaskanals (1,1') notwendig. Erfindungsgemäß ist ein Ringkörper (4') mit einem Maschinenteil, zum Beispiel dem Achschenkel (5) dichtend und drehfest verbunden. Dies kann über einen Preßsitz und Dichtringe (7) erfolgen.

Der Ringkörper (4') wirkt über kegelige Umfangsflächen (9), auf denen sich Rollkörper (10') erstrecken, mit Gegenringen (2",3") zusammen. Die Gleitringe (2',3') weisen ebenfalls kegelige Umfangsflächen zur Aufnahme von Rollkörpern (10') auf. Der Ringkörper (4') weist mindestens eine Öffnung (11') zur Durchführung von Luft oder eines geeigneten Gases auf. Darüber hinaus weist der Ringkörper (4') axial gerichtete Bohrungen (12') oder Durchbrüche auf, die als Schmierölkanal fungieren. Auf diese Weise wird sichergestellt, daß die zwischen Nabe (6) und Achsschenkel (5) angeordneten Lager (13,13') mit Schmierstoff versehen werden können, ohne daß zusätzliche Ölkanäle in die Maschinenteile eingebracht werden müssen. Die Gegenringe (2",3") sind radial gegenüber den Gleitringen (2',3') versetzt, so daß die Dichtung druckentlastet oder druckneutral ausgebildet ist.

## Patentansprüche

1. Vorrichtung zur Abdichtung eines Gaskanals zwischen zwei relativ zueinander rotierenden Maschinenteilen (5, 6) bei einer Reifendruckeinstellvorrichtung von Kraftfahrzeugen mit paarweise angeordneten, nach entgegengesetzten Seiten wirkenden Dichtungen, wobei die Dichtungen aus Gleitringen (2', 3') bestehen, die mit einem Ringkörper (4') zusammenwirken, welcher einem Maschinenteil (5) in dichter Verbindung steht und mindestens eine Öffnung (11') zur Durchführung des Gases aufweist, dadurch gekennzeichnet, daß der Ringkörper (4') auf jeder Seite eine zur Aufhahme eines einen Gegenring (2", 3") tragenden, elastischen Rollkörpers (10') bestimmte, kegelige Umfangsfläche (9) aufweist und die Gleitringe (2',3') gegenüber den Gegenringen (2",3") radial so versetzt sind, daß der Gasdruck im Gaskanal (1,1') keine negative Auswirkung auf die Dichtwirkung der Gleitringe (2',3') ausübt und die Gleitringe druckentlastet gelagert sind.

2. Vorrichtung nach Anspruch 1, dadurch gekennzeichnet, daß jeder Gleitring (2',3') eine zur Aufnahme eines elastischen Rollkörpers (10') bestimmte, kegelige Umfangsfläche (9) aufweist.

3. Vorrichtung nach den Ansprüchen 1 oder 2, dadurch gekennzeichent, daß der Ringkörper (4') mindestens eine axial gerichtete Bohrung (12') aufweist, die als Schmierölkanal fungiert.

## Claims

1. A device for sealing a gas conduit between two machine parts (5, 6) rotating relative to one another in a tyre pressure adjusting device for motor vehicles, with seals arranged in pairs and acting on opposite sides, wherein the seals consist of slip rings (2', 3') which cooperate with an annular body (4') which is in sealed connection with one machine part (5) and has at least one opening (11') for gas to pass through, characterized in that the annular body (4') has a conical peripheral surface (9) on each side for reception of an elastic rolling body (10') carrying a counter-ring (2", 3"), and the slip rings (2' 3') are so offset radially relative to the counter-rings (2", 3") that the gas pressure in the gas conduit (1, 1') exerts no negative effect on the sealing action of the slip rings (2', 3') and the slip rings are mounted relieved of pressure.

2. A device according to claim 1, characterized in that each slip ring (2', 3') has a conical peripheral surface (9) for reception of an elastic rolling body (10').

3. A device according to claim 1 or 2, characterized in that the annular body (4') has at least one axially directed bore (12'), which functions as a lubricant channel.

## Revendications

1. Dispositif pour l'étanchéité d'un canal de gaz entre deux pièces de machine (5, 6) tournant l'une par rapport à l'autre dans un dispositif de réglage de la pression des pneus de véhicules automobiles comportant des garnitures d'étanchéité arrangées par paire et agissant sur des côtés opposés, les garnitures consistant en des bagues de glissement (2', 3') qui coopèrent avec un corps annulaire (4'), qui est en liaison étanche avec une pièce de machine (5) et comprend au moins une ouverture (11') pour le passage du gaz, caractérisé en ce que le corps annulaire (4') comprend une surface périphérique conique (9) sur chaque côté adaptée à la réception d'un corps de roulement élastique (10') supportant une contre-bague (2", 3") et les bagues de glissement (2', 3') sont décalées radialement par rapport aux contre-bagues (2", 3") de sorte que la pression de gaz dans le canal de gaz (1, 1') n'exerce pas d'influence négative sur l'action d'étanchéité des bagues de glissement (2', 3') et que les bagues de glissement sont montées sans pression.

2. Dispositif selon la revendication 1, caractérisé en ce que chaque bague de glissement (2', 3') comprend une surface périphérique conique (9) adaptée à la réception d'un corps de roulement élastique (10').

3. Dispositif selon la revendication 1 ou 2, caractérisé en ce que le corps annulaire (4') présente un alésage (12') orienté axialement qui sert de canal de lubrifiant.
